(19) Europäisches Patentamt
European Patent Office
Office européen des brevets

(11) Publication number: 0 325 228 A2

# (12) EUROPEAN PATENT APPLICATION

(21) Application number: 89100794.0

(51) Int. Cl.4: C09K 19/34

(22) Date of filing: 18.01.89

(30) Priority: 18.01.88 JP 7979/88

(43) Date of publication of application:
26.07.89 Bulletin 89/30

(84) Designated Contracting States:
AT BE CH DE FR GB IT LI LU NL SE

(71) Applicant: Chisso Corporation
6-32, Nakanoshima 3-chome Kita-ku
Osaka-shi Osaka-fu(JP)

(72) Inventor: Takeshita, Fusayuki
17, Tatsumidai-Higashi 2-chome
Ichihara-shi Chiba-ken(JP)
Inventor: Terashima, Kanetsugu
8890, Goi Ichihara-shi
Chiba-ken(JP)
Inventor: Ichihashi,Mitsuyoshi
17, Tatsumidai-Higashi 2-chome
Ichihara-shi Chiba-ken(JP)
Inventor: Kikuchi, Makoto
1708-7, Jouzai
Kisarazu-shi Chiba-ken(JP)
Inventor: Furukawa, Kenji
16-7, Kurihama 1-chome
Yokosuka-shi Kanagawa-ken(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

## (54) A smectic liquid crystal mixture.

(57) A smectic liquid crystal mixture comprising base substance(s) and exhibiting at least one of achiral SC phase and the like, and having at least one of SC phase and the like, which mixture is useful for ferroelectric liquid crystal materials having high-speed response and also has a low melting point and smectic C phase within a broad temperature range, and liquid crystal materials using the mixture are provided,
which mixture comprises at least one member of pyridine compounds of the formula

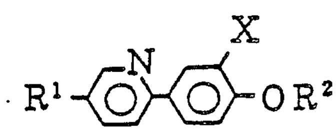

(I)

wherein $R^1$ and $R^2$ each are 1-18C alkyl and X is H or halogen, and at least one member of pyrimidine compounds of the formula

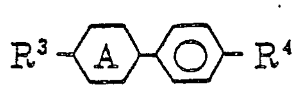

(II)

wherein $R^3$ and $R^4$ each are 1-18C alkyl or alkoxy and

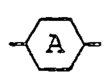

EP 0 325 228 A2

is

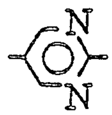 , 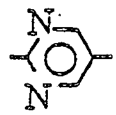 or 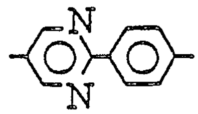 .

# A smectic liquid crystal mixture

## BACKGROUND OF THE INVENTION

This invention relates to a smectic liquid crystal mixture and a chiral smectic liquid crystal mixture using the same. More particularly it relates to a smectic liquid crystal mixture comprising a compound having a pyridine ring and a compound having a pyrimidine ring and a ferroelectric smectic liquid crystal material obtained by adding an optically active compound to the above smectic liquid crystal mixture and having a low melting point, exhibiting smectic phase within a broad temperature range and having superior response properties.

At present, TN (Twisted Nematic) liquid crystal display mode has been most broadly employed for liquid crystal display elements. The TN liquid crystal display has a number of advantages such as low driving voltage, small power consumption, etc., but TN mode display elements are inferior in the aspect of response rate to emissive display elements such as those of cathode ray tube display, electroluminescence display, plasma display, etc. A novel TN mode display element having the twist angle increased to 180-270° has also been developed, but it is still inferior in the aspect of response rate. As described above, efforts for various improvements have been made, but TN mode display element having a high response rate has not yet been realized. Recently, however, in the case of a novel display mode using ferroelectric liquid crystals the research on which mode has been extensively made, there is a possibility of notably improving the response rate (Clark et al, Applied Phys. Lett., 36, 899 (1980)). This mode utilizes chiral smectic phases such as chiral smectic C phase (hereinafter abbreviated to SC* phase). Phases exhibiting ferroelectricity are not limited only to SC* phase, but also it has been known that chiral smectic F, G, H, I phases and the like exhibit ferroelectricity.

A number of specific features are required for ferroelectric liquid crystal materials used for practically utilized ferroelectric liquid crystal display elements, but at present, no single compound which satisfies these specific features has not been found; hence it is necessary to use ferroelectric liquid crystal compositions obtained by blending some liquid crystal compounds or non-liquid crystal compounds.

Further, ferroelectric liquid crystal compositions are not limited only to those consisting only of ferroelectric liquid crystal compounds, but also Japanese patent application laid-open No. Sho 61-195187/1986 discloses that when at least one member of compounds exhibiting ferroelectric liquid crystal phase is blended with compound(s) or composition(s) exhibiting achiral smectic C, F, G, H, I phase or the like (hereinafter abbreviated to SC phase or the like) as base substance(s), then it is possible to make as a whole a ferroelectric liquid crystal composition. Further, it has also been reported that when at least one member of compounds which are optically active but exhibit no ferroelectric liquid crystal phase is blended with compound(s) or composition(s) exhibiting SC phase or the like as base substance(s), it is possible to make as a whole a ferroelectric liquid crystal composition (Mol. Cryst. Liq. Cryst., 89, 327 (1982)). In summary of these facts, it is seen that when at least one member of optically active compounds, irrespective of whether or not they exhibit ferroelectric liquid crystal phase, is blended with at least one member of base substances, it is possible to form a ferroelectric liquid crystal composition.

A smectic liquid crystal mixture comprising base substance(s) exhibiting at least one of the above-mentioned achiral SC phases and the like and having at least one of SC phase and the like will hereinafter be referred to as "base Sm mixture".

As the base Sm mixture suitable to practical use, liquid crystal mixtures exhibiting SC phase within a broad temperature range including room temperature have been particularly desired.

It has been known that as components of the base Sm mixture, liquid crystal compounds of phenyl benzoates, Schiff's bases, biphenyl compounds, phenylpyrimidines, 5-alkyl-2-(4-alkoxyphenyl)pyridines, etc. are used.

For example, Japanese patent application laid-open No. Sho 61-291679/1986 discloses that when ferroelectric chiral smectic compound(s) are blended with a base Sm mixture comprising 5-alkyl-2-(4-alkyloxyphenyl)pyrimidine(s), ferroelectric liquid crystal material(s) for light switching elements having superior response properties are obtained. The above laid-open application also discloses that as components of the base Sm mixture, three-ring pyrimidine compounds such as 5-alkyl-2-(4′-alkylbiphenylyl-4)-pyrimidines, 5-alkyl-2-(4′-alkyloxybiphenylyl)pyrimidines, 5-(4-alkoxyphenylyl)-2-(4-alkoxyphenyl)-pyrimidines, 5-(4-alkoxyphenyl)-2-(4-alkylphenyl)pyrimidines, 5-(4-alkylphenyl)-2-(4-alkoxyphenyl)-pyrimidines, etc. are used.

Further, pamphlet of PCT International Application laid-open No. WO 086/06401 discloses a ferroelectric smectic C liquid crystal mixture containing 5-alkyl-2-(4-alkoxyphenyl)pyrimidines as component.

As described above and as illustrated later, a number of attempts of searching for chiral or achiral smectic C liquid crystal compounds as a component of ferroelectric liquid crystal materials have been made, but liquid crystal materials provided with a broad smectic C temperature range together with high-speed response properties in well-balanced manner are very few.

For practical use, compounds having a ferroelectric smectic C phase the lower limit temperature of which is -10°C or lower and the higher limit temperature of which is 50°C or higher are preferred. Further, it is necessary therefor that the base Sm mixture also have similarly a broad smectic C phase (hereinafter abbreviated to SC phase) temperature range.

## SUMMARY OF THE INVENTION

As apparent from the foregoing, a first object of the present invention is to provide a base Sm mixture having a low melting point and smectic C phase within a broad temperature range and useful for realizing ferroelectric liquid crystal materials having highspeed response properties.

A second object of the present invention is to provide a liquid crystal material comprising the above-mentioned base Sm mixture as its component and exhibiting ferroelectric smectic phase within a broad temperature range including room temperature.

Another object of the present invention is to provide a liquid crystal display element suitable to practical use and having a high response rate.

The present inventors have made extensive research in order to further improve the invention disclosed in the above-mentioned Japanese patent application laid-open No. Sho 61-291679/1986, and as a result have found that when pyridine compound(s) are mixed with smectic C liquid crystalline pyrimidine compound(s), it is possible to lower the melting points of the resulting smectic C liquid crystal mixture(s) to thereby achieve the present invention.

The present invention in a first aspect resides in;

(1) a smectic liquid crystal mixture comprising at least one member of pyridine compounds expressed by the formula

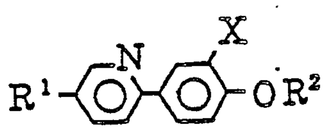 (I)

wherein $R^1$ and $R^2$ each represent an alkyl group of 1 to 18 carbon atoms and X represents hydrogen atom or a halogen atom, and at least one member of pyrimidine compounds expressed by the formula

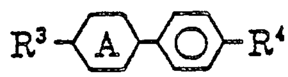 (II)

wherein $R^3$ and $R^4$ each represent an alkyl group or an alkoxy group each of 1 to 18 carbon atoms and

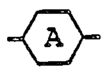

represents

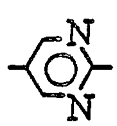 , 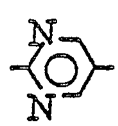 or 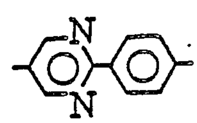 ;

(2) a smectic liquid crystal mixture according to item (1) wherein the content of said at least one member of pyridine compounds is 5 to 80% by weight and that of said at least one member of pyrimidine compounds is 20 to 95% by weight; and

(3) a smectic C liquid crystal mixture according to item (1) wherein said at least one member of pyridine compounds is a smectic C liquid crystalline pyridine compound expressed by the formula

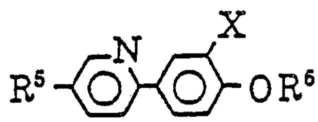 (III)

wherein $R^5$ represents a linear alkyl group of 6 to 12 carbon atoms, $R^6$ represents a linear alkyl group of 5 to 12 carbon atoms and X represents hydrogen atom or a fluorine atom;
at least one member of pyrimidine compounds is a smectic C liquid crystalline pyrimidine compound expressed by any one of the following formulas (IV), (V) and (VI);
and the content of said at least one member of pyridine compounds is 5 to 80% by weight:

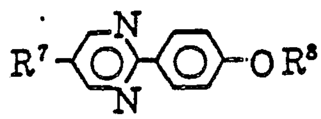 (IV)

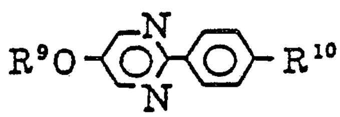 (V)

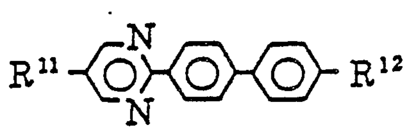 (VI)

wherein $R^7$ represents a linear alkyl group of 6 to 12 carbon atoms, $R^8$ represents a linear alkyl group of 6 to 12 carbon atoms, $R^9$ represents a linear alkyl group of 7 to 18 carbon atoms, $R^{10}$ represents a linear alkyl group of 4 to 18 carbon atoms and $R^{11}$ and $R^{12}$ each represent a linear alkyl group or alkoxy group each of 5 to 10 carbon atoms.

The present invention in a second aspect and a third aspect resides in;

(4) a ferroelectric smectic liquid crystal mixture comprising at least one member of pyridine compounds expressed by the formula

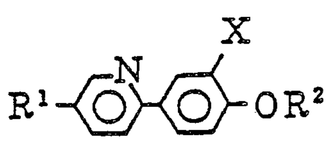 (I)

wherein $R^1$ and $R^2$ each represent an alkyl group of 1 to 18 carbon atoms and X represents hydrogen atom or a halogen atom; at least one member of pyrimidine compounds expressed by the formula

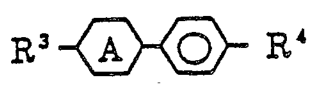 (II)

wherein $R^3$ and $R^4$ each represent an alkyl group or an alkoxy group each of 1 to 18 carbon atoms and

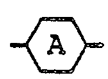

represents

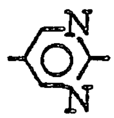 , 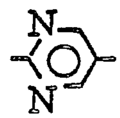 or 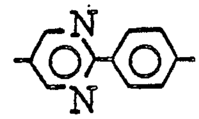 ;

and
at least one member of optically active compounds; and

(5) a liquid crystal display element using a ferroelectric liquid crystal composition as set forth in item (4).

BRIEF DESCRIPTION OF THE DRAWINGS

Fig. 1 shows a chart illustrating the phase transition of a mixture system of a pyridine composition A and a pyrimidine composition B.

Fig. 2 shows a chart illustrating the phase transition of a mixture system of a pyridine composition C and the composition A.

Fig. 3 shows a chart illustrating the phase transition of a mixture system of a pyrimidine composition D and the composition B.

In these figures, C, SF, SC, SA and I represent the respective phases of crystal, smectic F, smectic C, smectic A and isotropic liquid, and $S_3$ and $S_4$ each mean an unidentified smectic phase.

DETAILED DESCRIPTION OF PREFERRED EMBODIMENTS

In the smectic liquid crystal mixture of the present invention, the content of pyridine compounds expressed by the formula (I) or (III) are preferably 5 to 80% by weight based on the weight of the mixture and the content of the pyridine component is more preferably 10 to 70% by weight. If the content of the pyridine component is less than 5% by weight, reduction in the melting point of the resulting mixture is insufficient, whereas if it exceeds 80% by weight, the lower limit temperature of smectic C phase does not sufficiently lower so that undesirable phases other than C phase often appear; hence such an excess content is also undesirable.

As already known, SC phase is desirable as smectic phase for developing ferroelectricity; hence in the smectic liquid crystal mixture described in the above item (1) or item (2), too, those having SC phase are preferred. Thus, as the compound expressed by the formula (I) or formula (II) as the component compound of the mixture, those having SC phase are also preferably used. Among compounds expressed by these formulas, even compounds exhibiting no SC phase may be used as a component for lowering the eutectic point or the viscosity of the resulting smectic mixture or ferroelectric smectic mixture within a range where the compounds enable the smectic mixture or the ferroelectric smectic mixture to exhibit SC or SC* phase. As the pyridine compound used in the present invention, those of the formula (I) wherein $R^1$ represents a linear alkyl group of 6 to 12 carbon atoms, $R^2$ represents a linear alkyl group of 5 to 12 carbon atoms and X represents hydrogen atom or fluorine atom are particularly preferred. A part of the compounds are shown in Table 1.

As pyrimidine compounds constituting a component of the mixture of the present invention, 5-alkyl-2-(4-alkoxyphenyl)pyrimidines, 5-alkoxy-2-(4-alkylphenyl)pyrimidines, 5-alkyl-2-(4′-alkylbiphenylyl-4)pyrimidines, 5-alkyl-2-(4′-alkoxybiphenylyl-4)pyrimidines, etc. are preferably used. As 5-alkyl-2-(4-alkoxyphenyl)-pyrimidines,those having a linear alkyl group or alkoxy group each of 6 to 12 carbon atoms are preferred. As 5-alkoxy-2-(4-alkylphenyl)pyrimidines, those having a linear alkoxy group of 7 to 18 carbon atoms and a linear alkyl group of 4 to 18 carbon atoms are preferred. Further, 5-alkyl-2-(4′-alkylbiphenylyl-4)pyrimidines, 5-alkyl-2-(4′-alkoxybiphenylyl-4)pyrimidines and 5-alkoxy-2-( 4′-alkylbiphenylyl)pyrimidines each having a linear alkyl group or alkoxy group each of 5 to 10 carbon atoms are preferably used. A part of these compounds are shown in Tables 2-5 together with their phase transition points.

Table 1

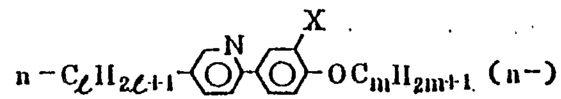

(IIIa)

| In formula (IIIa) X | ℓ | m | Phase transition point (°C) C | SH | SG | SF | SB | SC | SA | N | I |
|---|---|---|---|---|---|---|---|---|---|---|---|
| H | 7 | 4 | • 53.5 | — | (• 40.5 | • 48.4 ) | — | • 63.8 | — | • 67.8 | • |
| ″ | ″ | 5 | • 26.5 | — | • 35 | • 48 | — | • 67.5 | — | • 68.7 | • |
| ″ | ″ | 6 | • 34.0 | (• 31.2 ) | • 44.4 | • 53 | — | • 74.4 | — | • 75.2 | • |
| ″ | ″ | 7 | • 24.0 | • 31.5 | • 40.3 | • 53 | — | • 76.6 | — | — | • |
| ″ | ″ | 8 | • 45.0 | • 45.4 | • 56.5 | — | — | • 80.4 | — | — | • |
| ″ | ″ | 9 | • 42.5 | — | — | • 58.5 | — | • 80.7 | — | — | • |
| ″ | ″ | 10 | • 39.5 | — | — | • 62.0 | — | • 82.1 | — | — | • |
| ″ | ″ | 11 | • 48.8 | — | — | • 63.7 | — | • 81.4 | — | — | • |
| ″ | ″ | 12 | • 49.4 | — | — | • 67.0 | — | • 82.1 | — | — | • |
| ″ | 8 | 4 | • 32.7 | — | — | — | • 57.3 | • 66.8 | — | • 69.4 | • |
| ″ | ″ | 5 | • 37.4 | — | — | — | • 52 | • 70.1 | — | — | • |
| ″ | ″ | 6 | • 13.8 | • 15.0 | • 19.0 | • 54.0 | — | • 76.2 | — | — | • |
| ″ | ″ | 7 | • 27.3 | — | — | • 57.0 | — | • 77.5 | — | — | • |
| ″ | ″ | 8 | • 34.6 | — | — | • 60.2 | — | • 81.3 | — | — | • |
| ″ | ″ | 9 | • 37.5 | — | — | • 61.5 | — | • 81.4 | — | — | • |

Table 1 (-1)

| In formula (IIIa) | | | Phase transition point (°C) | | | | | | | | |
|---|---|---|---|---|---|---|---|---|---|---|---|
| X | ℓ | m | C | SII | SG | SF | SB | SC | SA | N | I |
| II | 8 | 10 | • 40.8 | — | — | • 65.5 | — | • 82.1 | — | — | • |
| ″ | ″ | 11 | • 47.3 | — | — | • 68.0 | — | • 82.2 | — | — | • |
| ″ | ″ | 12 | • 46.0 | — | — | • 70.2 | — | • 82.4 | — | — | • |
| ″ | 9 | 5 | • 42.5 | — | — | — | • 65.0 | • 72.4 | • 74.5 | — | • |
| ″ | ″ | 6 | • 36.0 | — | — | — | • 64.4 | • 80.5 | — | — | • |
| ″ | ″ | 7 | • 33.0 | — | — | — | • 64.0 | • 81.5 | — | — | • |
| ″ | ″ | 8 | • 31.6 | — | — | — | • 66.0 | • 85.1 | — | — | • |
| ″ | ″ | 9 | • 37.4 | — | — | — | • 69.6 | • 84.9 | — | — | • |
| ″ | ″ | 10 | • 38.6 | — | — | — | • 69.2 | • 86.3 | — | — | • |
| ″ | ″ | 11 | • 40.7 | — | — | — | • 75.4 | • 86.0 | — | — | • |
| ″ | ″ | 12 | • 43.5 | — | — | — | • 77.8 | • 85.2 | — | — | • |
| ″ | 10 | 5 | • 44.4 | — | — | — | • 66.7 | • 70.4 | • 74.7 | — | • |
| ″ | ″ | 6 | • 30.0 | — | — | — | • 67.6 | • 80.0 | — | — | • |
| ″ | ″ | 7 | • 41.0 | — | — | — | • 67.8 | • 80.8 | — | — | • |
| ″ | ″ | 8 | • 34.5 | — | — | — | • 71.2 | • 84.1 | — | — | • |
| ″ | ″ | 9 | • 40.7 | — | — | • 72.4 | — | • 84.0 | — | — | • |

Table 1 (-2)

| In formula (IIIa) | | | Phase transition point (°C) | | | | | | | | |
|---|---|---|---|---|---|---|---|---|---|---|---|
| X | ℓ | m | C | SH | SG | SF | SB | SC | SA | N | I |
| H | 10 | 10 | • 41.3 | — | — | • 75.8 | — | • 85.4 | — | — | • |
| 〃 | 〃 | 11 | • 47.6 | — | — | • 77.1 | — | • 85.2 | — | — | • |
| 〃 | 〃 | 12 | • 48.0 | — | — | • 79.9 | — | • 86.1 | — | — | • |
| F | 6 | 7 | • 33.0 | — | — | — | — | • 34.0 | • 35.0 | • 39.7 | • |
| 〃 | 〃 | 10 | • 42.8 | — | — | — | — | (• 37.9) | — | • 45.8 | • |
| 〃 | 7 | 6 | • 25.0 | — | — | — | — | • 40.6 | • 50.5 | — | • |
| 〃 | 〃 | 7 | • 32.5 | — | — | — | — | • 40.1 | • 50.4 | — | • |
| 〃 | 〃 | 8 | • 26.0 | — | — | — | — | • 46.0 | • 53.4 | — | • |
| 〃 | 〃 | 9 | • 37.0 | — | — | — | — | • 45.0 | • 53.6 | — | • |
| 〃 | 8 | 8 | • 34.7 | — | — | — | — | • 49.9 | • 54.8 | — | • |
| 〃 | 〃 | 9 | • 47.0 | — | — | — | — | • 50.3 | • 55.4 | — | • |
| 〃 | 〃 | 10 | • 44.0 | — | — | — | — | • 53.2 | • 56.5 | — | • |
| 〃 | 〃 | 11 | • 54.3 | — | — | — | — | (• 52.4) | • 56.5 | — | • |
| 〃 | 9 | 7 | • 35.0 | — | — | — | — | • 45.6 | • 57.6 | — | • |
| 〃 | 〃 | 12 | • 46.3 | — | — | — | — | • 57.8 | • 62.1 | — | • |
| 〃 | 10 | 5 | • 38.4 | — | — | — | — | • 23.4 | • 55.0 | — | • |
| 〃 | 〃 | 9 | • 46.7 | — | — | — | — | • 57.8 | • 61.4 | — | • |

(Note) In the column of phase transition points, C, SH, SG, SF, SA, N and I represent the respective phases of crystal, smectic H, smectic G, smectic F, smectic B, smectic A, nematic and isotropic liquid.

Table 2

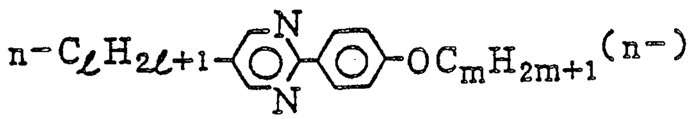 (IVa)

| In formula (IVa) | | Phase transition points(°C) | | | | | | | | |
|---|---|---|---|---|---|---|---|---|---|---|
| $\ell$ | m | C | | SC | | SA | | N | | I |
| 8 | 6 | • | 27.5 | • | 47.4 | • | 58.1 | • | 66.3 | • |
| 9 | 〃 | • | 24 | • | 43 | • | 69.5 | • | 70.5 | • |
| 10 | 〃 | • | 36 | • | 57.5 | • | 71.5 | — | | • |
| 9 | 7 | • | 32.5 | • | 48 | • | 72.5 | — | | • |
| 10 | 〃 | • | 46 | • | 62.5 | • | 72 | — | | • |
| 8 | 8 | • | 35 | • | 56.5 | • | 63.1 | • | 69.8 | • |
| 9 | 〃 | • | 33 | • | 60 | • | 75.5 | — | | • |
| 10 | 〃 | • | 37 | • | 68.5 | • | 73.5 | — | | • |
| 7 | 9 | • | 47.2 | • | 50.7 | • | 54.7 | • | 68.6 | • |
| 8 | 〃 | • | 35.3 | • | 58.5 | • | 65.8 | • | 68.9 | • |
| 8 | 10 | • | 32.8 | • | 60.8 | • | 66.5 | • | 70.4 | • |
| 7 | 11 | • | 55 | (• | 54.5) | • | 62.5 | • | 70 | • |
| 8 | 〃 | • | 45.8 | • | 61.0 | • | 67.3 | • | 69.4 | • |
| 7 | 12 | • | 59.5 ( | • | 57.5 ) | • | 63 | • | 71 | • |
| 8 | 〃 | • | 44 | • | 62.6 | • | 68.0 | • | 70.0 | • |

Table 3

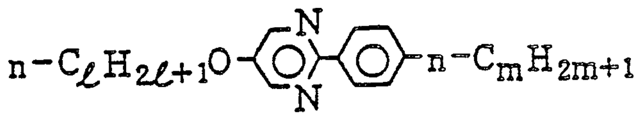 (Va)

| In formula (Va) | | Phase transition points (°C) | | | | | | | | |
|---|---|---|---|---|---|---|---|---|---|---|
| ℓ | m | C | | SX | | SC | | SA | | I |
| 7 | 6 | • | 32.5 | — | | • | 50.6 | • | 76.6 | • |
| 8 | 〃 | • | 27.0 | — | | • | 67.5 | • | 84.2 | • |
| 9 | 〃 | • | 47.7 | — | | • | 77.2 | • | 83.6 | • |
| 10 | 〃 | • | 38.1 | • | 35.2 | • | 82.4 | • | 86.5 | • |
| 11 | 〃 | • | 38.8 | • | 42.3 | • | 84.3 | • | 86.4 | • |
| 12 | 〃 | • | 35.0 | • | 47.4 | • | 85.6 | • | 87.1 | • |
| 13 | 〃 | • | 41.7 | • | 48.0 | • | 82.7 | • | 84.8 | • |
| 14 | 〃 | • | 34.4 | • | 54.9 | • | 85.2 | • | 86.6 | • |
| 15 | 〃 | • | 49.9 | • | 56.7 | • | 83.3 | • | 85.2 | • |
| 7 | 7 | • | 32.2 | — | | • | 45.0 | • | 77.5 | • |
| 8 | 〃 | • | 30.8 | — | | • | 64.0 | • | 84.4 | • |
| 9 | 〃 | • | 34.2 | — | | • | 76.3 | • | 85.1 | • |
| 10 | 〃 | • | 32.2 | • | 33.4 | • | 83.1 | • | 87.7 | • |
| 11 | 〃 | • | 38.7 | • | 45.2 | • | 86.8 | • | 88.6 | • |
| 12 | 〃 | • | 45.8 | • | 54.2 | • | 88.6 | • | 89.3 | • |

Table 3 (-continued)

| In formula (Va) | | Phase transition points (°C) | | | | |
|---|---|---|---|---|---|---|
| ℓ | m | C | SX | SC | SA | I |
| 7 | 8 | • 45.1 | — | (• 39.0) | • 77.5 | • |
| 8 | ″ | • 38.4 | — | • 54.8 | • 83.6 | • |
| 9 | ″ | • 40.0 | — | • 76.0 | • 84.6 | • |
| 10 | ″ | • 40.3 | (• 32.8) | • 83.8 | • 88.4 | • |
| 11 | ″ | • 55.6 | — | • 87.2 | — | • |
| 12 | ″ | • 40.5 | • 57.8 | • 88.7 | — | • |
| 13 | ″ | • 54.1 | • 62.2 | • 88.2 | — | • |
| 8 | 9 | • 35.5 | (• 28.5) | • 53.0 | • 84.5 | • |
| 9 | ″ | • 39.0 | — | • 73.9 | • 84.9 | • |
| 10 | ″ | • 37.0 | (• 31.7) | • 83.0 | • 87.1 | • |
| 11 | ″ | • 45.0 | • 46.2 | • 87.0 | — | • |
| 12 | ″ | • 46.5 | • 59.0 | • 88.9 | — | • |
| 13 | ″ | • 52.0 | • 65.3 | • 88.8 | — | • |
| 8 | 10 | • 31.7 | — | • 43.0 | • 82.8 | • |
| 9 | ″ | • 46.6 | — | • 71.4 | • 83.8 | • |
| 10 | ″ | • 42.0 | — | • 80.9 | • 87.0 | • |
| 11 | ″ | • 51.4 | (• 47.0) | • 86.5 | — | • |
| 12 | ″ | • 51.7 | • 59.4 | • 88.2 | — | • |

## Table 4

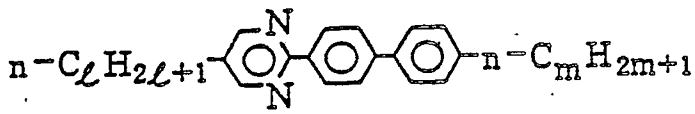 (VIa)

| In formula (VIa) | | Phase transition points (°C) | | | | |
|---|---|---|---|---|---|---|
| ℓ | m | C | SC | SA | N | I |
| 6 | 5 | • 58 | • 81 | — | • 164 | • |
| 7 | 〃 | • 54 | • 114 | • 124 | • 168 | • |
| 8 | 〃 | • 64 | • 128 | • 137 | • 163 | • |
| 6 | 6 | • 68 | • 95 | — | • 115.2 | • |
| 7 | 〃 | • 72 | • 107.6 | • 134.1 | • 160.7 | • |
| 8 | 〃 | • 65.6 | • 98 | • 141.2 | • 156 | • |
| 6 | 7 | • 68 | • 97 | — | • 156 | • |
| 8 | 〃 | • 58 | • 134 | • 144 | • 157 | • |
| 6 | 8 | • 74.3 | • 105.2 | — | • 149.9 | • |
| 7 | 〃 | • 76.5 | • 98.7 | • 141.2 | • 155.9 | • |
| 8 | 〃 | • 72.3 | • 130.2 | • 145.2 | • 152.5 | • |

Table 5 $n-C_{\ell}H_{2\ell+1}$- 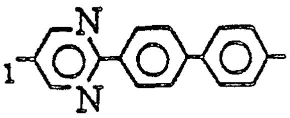 -$OC_mH_{2m+1}$(n-)

(VIb)

| In formula (VIb) | | Phase transition points (°C) | | | | | | |
|---|---|---|---|---|---|---|---|---|
| ℓ | m | C | | SC | | N | | I |
| 6 | 5 | • | 98.2 | • | 116.1 | • | 184.1 | • |
| 8 | 〃 | • | 66.3 | • | 135.7 | • | 179.5 | • |
| 6 | 6 | • | 93.7 | • | 122.2 | • | 183.6 | • |
| 8 | 〃 | • | 81.2 | • | 143.3 | • | 179.9 | • |
| 6 | 7 | • | 90.2 | • | 129.3 | • | 177.5 | • |
| 8 | 〃 | • | 69.6 | • | 148.5 | • | 175.2 | • |
| 6 | 8 | • | 81.2 | • | 129.5 | • | 171.8 | • |
| 8 | 〃 | • | 68.4 | • | 151.6 | • | 173.6 | • |

In the column of phase transition point in Tables 2-5, C, SC, SA, N and I are as defined in Table 1 and SX represents an unidentified smectic phase.

The optically active compound as a component of the ferroelectric smectic liquid crystal mixture of the present invention has no particular limitation as far as it is soluble in the SC phase of the base Sm mixture, and the following compounds may be generally exemplified:

(a) compounds having the following groups as a optically active site:

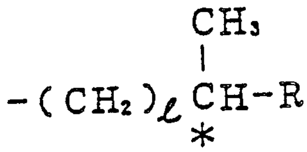

( $\ell$ = 0~12, R = alkyl )

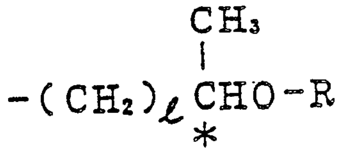

( $\ell$ = 0~12, R = alkyl )

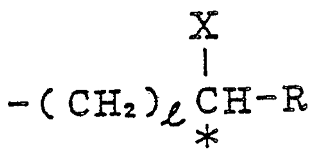

( $\ell$ = 0~12, R = alkyl, X = halogen, CN group or trifluoromethyl group)

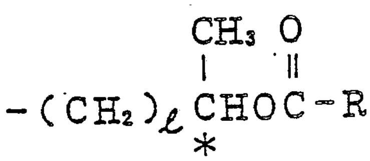

( $\ell$ = 0~12, R = alkyl )

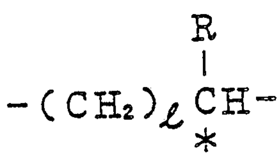

( $\ell$ = 0~12, R = alkyl, aralkyl)

and also having the following central groups as a core structure:

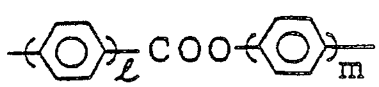

( $\ell$ = 0~3, m = 0~3 )

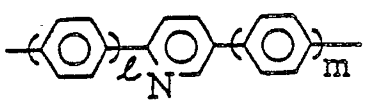

( $\ell$ = 0~2, m = 0~2 )

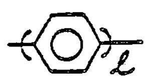

( $\ell$ = 1~3 )

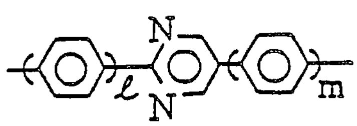

( $\ell$ = 0~2, m = 0~2 )

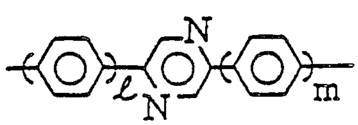

( $\ell$ = 0~2, m = 0~2 )

(b) compounds having the hydrogen atom(s) of the six-membered ring(s) as the above-mentioned core structures replaced by halogen atom(s), cyano group(s) or alkyl groups, and compounds having the linkage of the six-membered rings at the above-mentioned central groups replaced by the following linking bridge:

$-COO-$, $-OCO-$, $-CH_2O-$, $-OCH_2-$,

$-CH_2CH_2-$, $-CH=CH-$, $-CH=N-$, $-N=CH-$,

$-N=N-$ or $\underbrace{-N=N-}_{O}$

Concrete examples of the optically active substances preferably used as the component of the ferroelectric liquid crystal mixture of the present invention and their references cited are as follows:

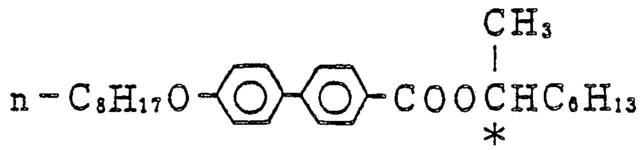

(Japanese patent application laid-open No. Sho 59-118744/1984)

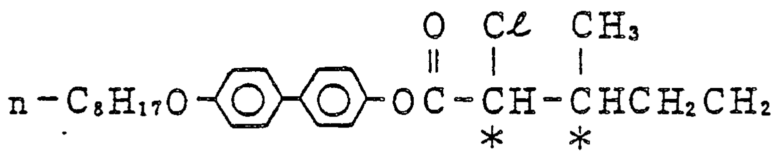

(Japanese patent application laid-open No. Sho 60-218358/1985)

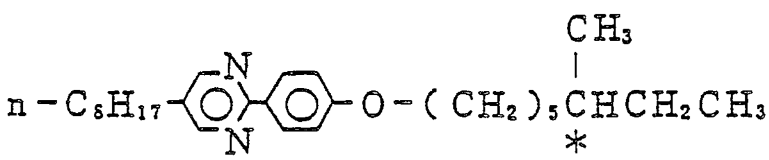

(Japanese patent application laid-open No. Sho 60-260564/1985)

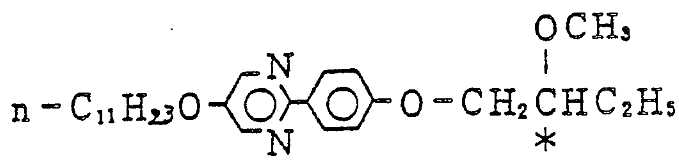

(Preprints for 12th liquid crystal sympodium, 2F13)

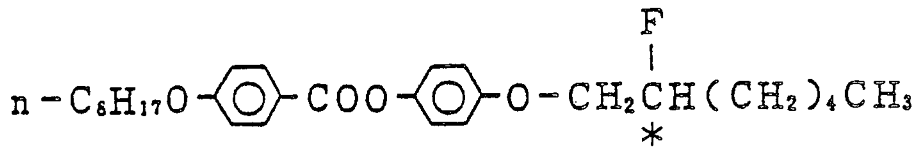

(Preprints for 12th liquid crystal sympodium, 2F11)

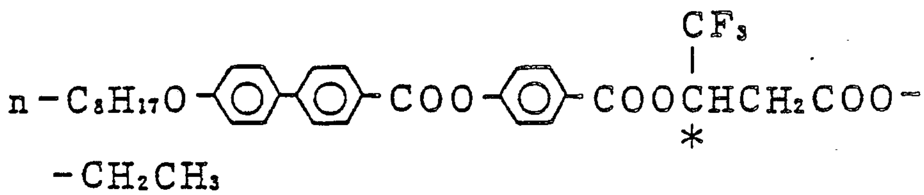

(Chemistry Express Vol. 2, No. 1. pp 53~56 (1987))

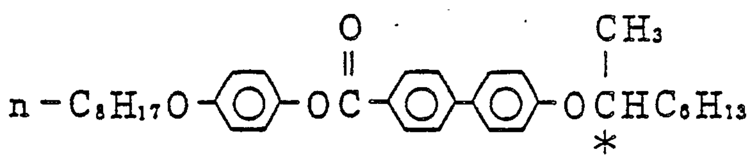

(Japanese patent application laid-open No. Sho 61-43/1986)

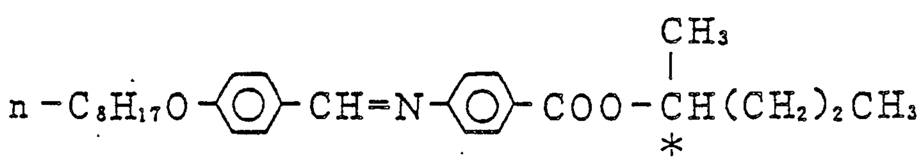

(Ferroelectrics 58, 21 (1984))

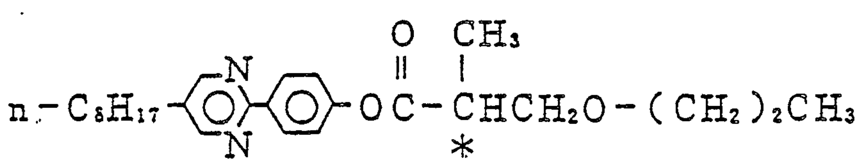

(Japanese patent application laid-open No. Sho 61-44845/1986)

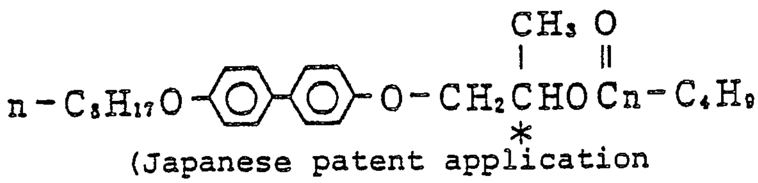

(Japanese patent application laid-open No. Sho 61-133269/1986)

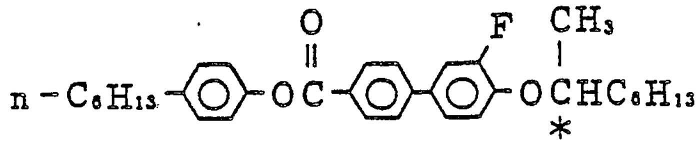

(Japanese patent application laid-open No. Sho 61-210056/1986)

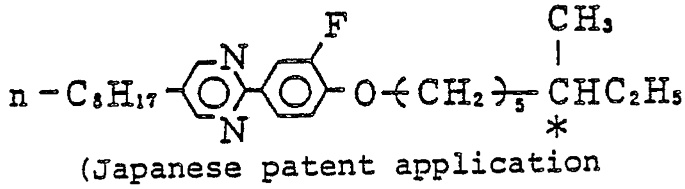

(Japanese patent application laid-open No. Sho 62-169765/1987)

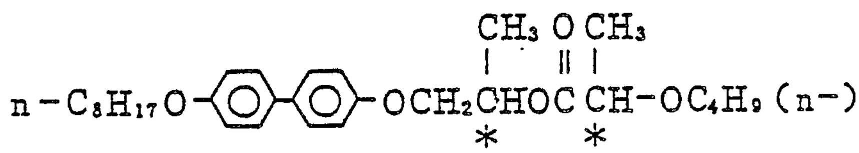

(Japanese patent application No. Sho 62-49796/1987)

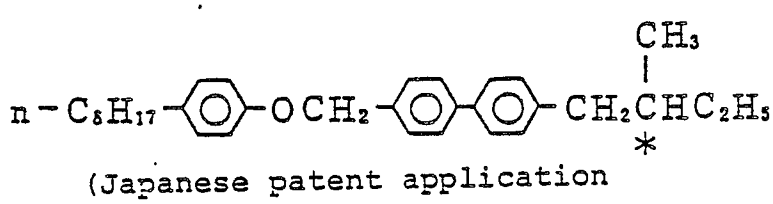

(Japanese patent application laid-open No. Sho 61-63633/1986)

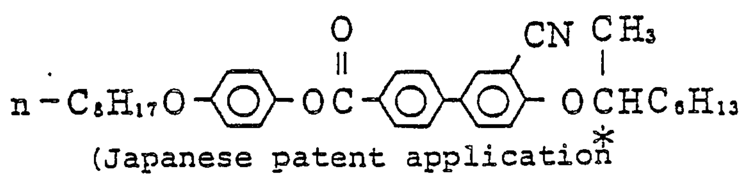

(Japanese patent application laid-open No. Sho 63-48254/1988)

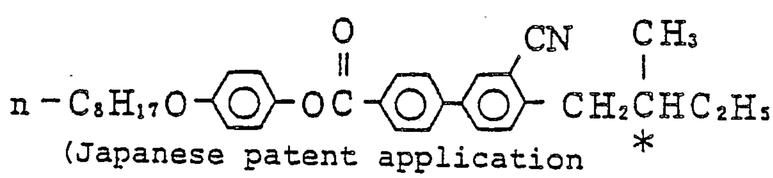

(Japanese patent application laid-open No. Sho 63-233966/1988)

Next, the function and effectiveness of the present invention will be described by way of examples.

A pyridine composition A consisting of

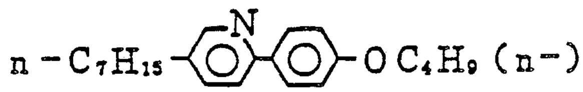 5 wt. %

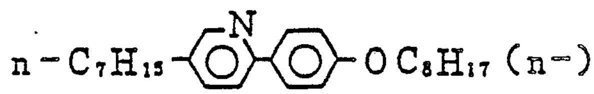 40 〃

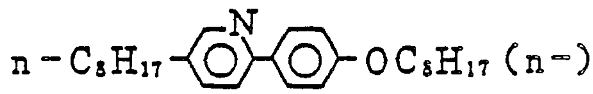 20 〃

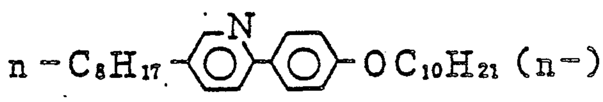 10 〃

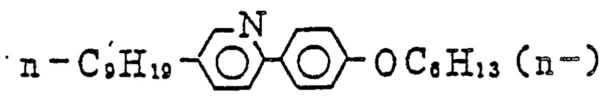 25 〃

has the following phase transitions:

$$C \xrightarrow{13^{\circ}C} S_4 \xleftrightarrow{18^{\circ}C} S_3 \xleftrightarrow{28^{\circ}C} SF \xleftrightarrow{58^{\circ}C} SC \xleftrightarrow{80^{\circ}C} I$$

$S_4$ and $S_3$ each mean an unidentified smectic phase. This composition A is a mixture consisting only of pyridine compounds.

A pyrimidine composition B consisting of

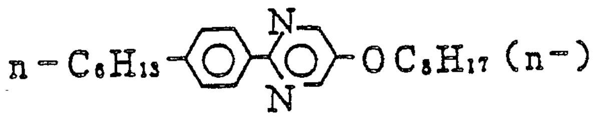 25 wt. %

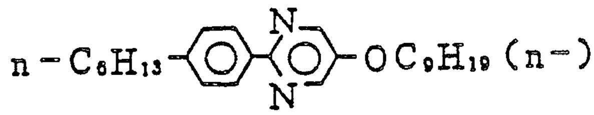 10 〃

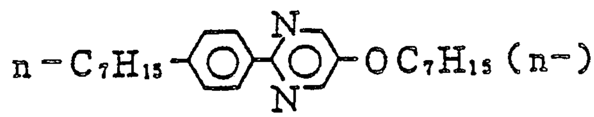 20 〃

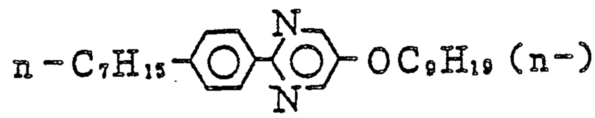 25 〃

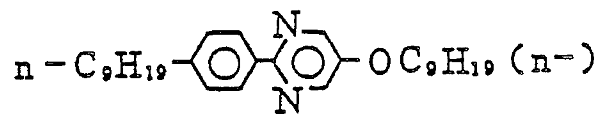 20 〃

has phase transition points of

$$C \xrightarrow{8^\circ C} SC \xleftrightarrow{64^\circ C} SA \xleftrightarrow{83^\circ C} I$$

and is a mixture consisting only of the pyrimidine compounds expressed by the formula (II).

A mixture was prepared from the above pyridine composition A and pyrimidine composition B and its phase transition was observed. The results are shown in Fig. 1. As seen from Fig. 1, when the mixing proportion of the pyridine composition is in the range of 10 to 70%, the lower limit temperature of SC phase of the mixture is lower than the respective lower limit temperatures of the compositions A and B.

Next, in the case of the mixture consisting only of pyridine compounds or in the case the mixture consisting only of pyrimidine compounds, extension of the SC region is not remarkable. This fact will be exemplified by using the following pyridine compositon C and pyrimidine composition D.

The proportion and phase transition of the composition C and those of the composition D are as follows:

<u>Composition C</u>

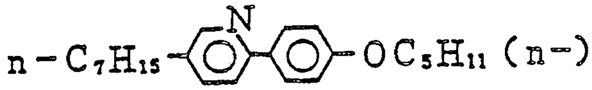 20 wt.%

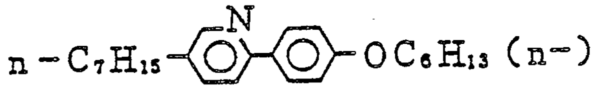 10 "

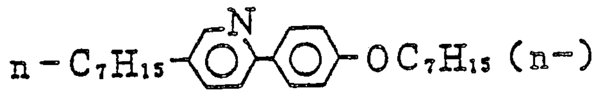 40 "

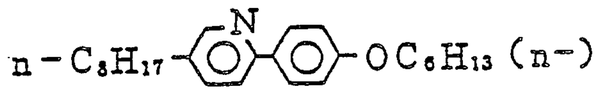 15 "

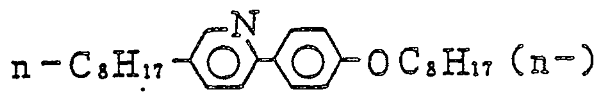 15 "

( C $\xrightarrow{5^\circ C}$ $S_4$ $\xleftrightarrow{18^\circ C}$ $S_3$ $\xleftrightarrow{31^\circ C}$ SF $\xleftarrow{50^\circ C}$ SC $\xleftrightarrow{75^\circ C}$ I )

Composition D

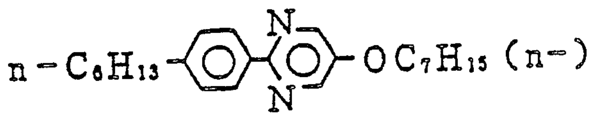

15 wt.%

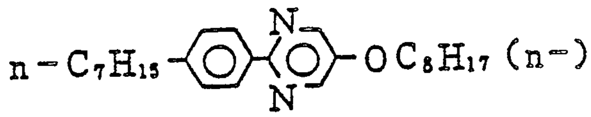

40 "

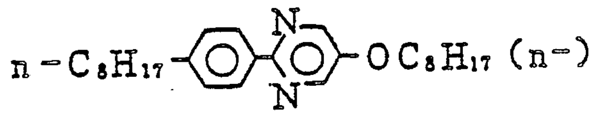

10 "

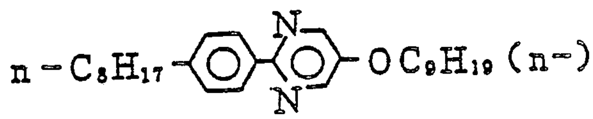

10 "

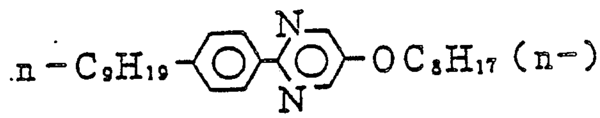

25 "

$$( C \xrightarrow{7^\circ C} SC \xleftrightarrow{54^\circ C} SA \xleftrightarrow{83^\circ C} I )$$

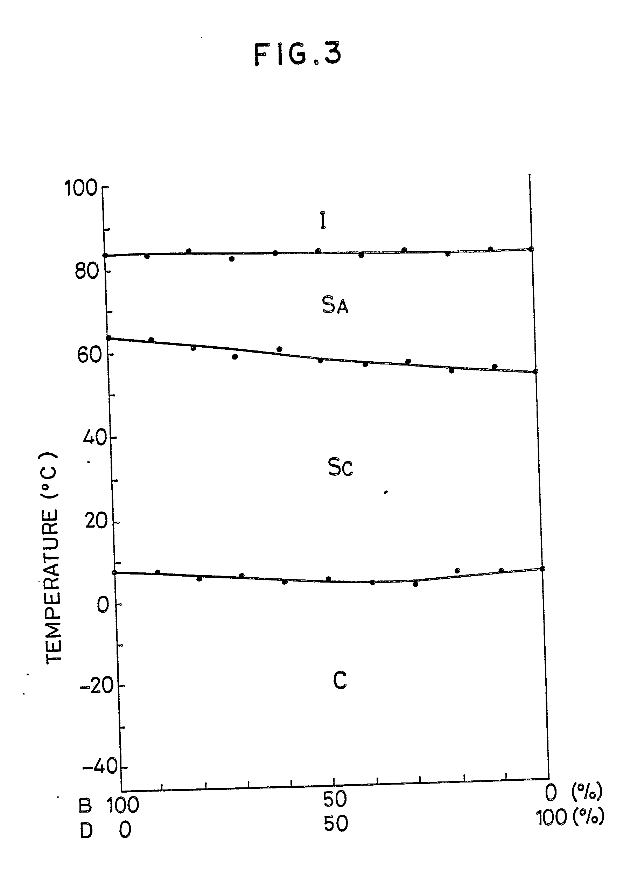

The phase transition points of a pyridine mixture consisting of the composition A and the composition C are shown in Fig. 2 and those of a pyrimidine mixture consisting of the composition B and the composition D are shown in Fig. 3. It is seen that reduction in the lower limit of SC phase is not observed from Fig. 2, and reduction in the lower limit (i.e. m.p.) of SC phase is observed from Fig. 3, but it is very small.

As described above, when the pyridine compounds of the formula (I) together with the pyrimidine compounds of the formula (II) are used as components, it is possible to obtain a base Sm mixture having a broad SC phase temperature range. Further, since the pyridine compounds of the formula (I) and also the pyrimidine compounds of the formula (II) both have a low viscosity for smectic C liquid crystals, the mixture of the present invention is suitable as base Sm mixtures.

Further, ferroelectric smectic C liquid crystal mixtures obtained by adding optically active compound(s) to the base Sm mixtures exhibit SC* phase within a broad temperature range including room temperature, whereby it is possible to constitute a liquid crystal element having a quick response.

The present invention will be described in more detail by way of Examples, but it should not be construed to be limited thereto.

In addition, the phase transition points in terms of °C in Examples were sought by way of differential scanning calorimetry (DSC) under by observing the texture polarizing microscope. The response time was sought from change in the intensity of transmitted light caused by placing a liquid crystal element between two polarizers the polarizing planes of which were crossed to each other and impressing a square wave of ±10V and 100 Hz. Further, the spontaneous polarization (Ps) was sought according to Sawyer-Tower method.

Example 1

The following base Sm mixture E was prepared from two compounds of the formula (I) having smectic C phase and three compounds of the formula (II) having smectic C phase:

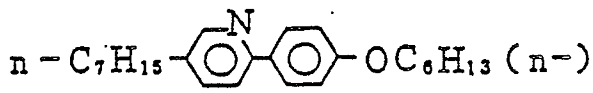 20 wt.%

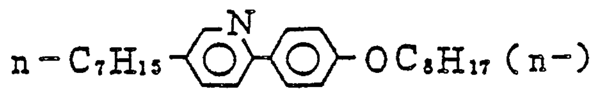 20 "

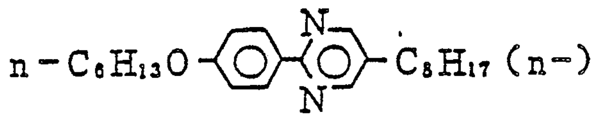 20 "

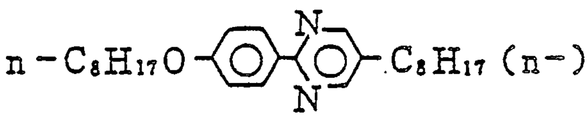 20 "

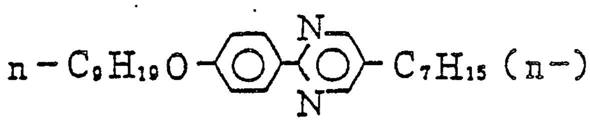 20 "

The phase transition points of this mixture E were as follows:

$$C \xrightarrow{-7^{\circ}C} SC \overset{59^{\circ}C}{\longleftrightarrow} SA \overset{63^{\circ}C}{\longleftrightarrow} N \overset{69^{\circ}C}{\longleftrightarrow} I$$

With 90 parts by weight of this mixture E was mixed an optically active compound of the formula

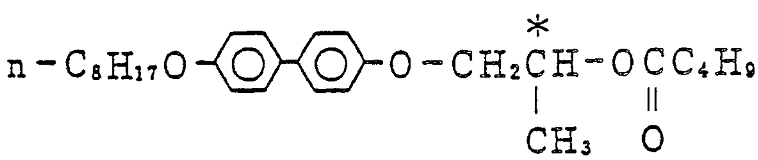

in 10 parts by weight to prepare a ferroelectric liquid crystal mixture F. The pahse transition points of this mixture were as follows:

$$C \xrightarrow{-10^{\circ}C} SC^{*} \overset{59^{\circ}C}{\longleftrightarrow} SA \overset{63^{\circ}C}{\longleftrightarrow} N^{*} \overset{69^{\circ}C}{\longleftrightarrow} I$$

Its Ps at 25 °C was 8.9 nC/cm$^2$ and its tilt angle was 22.6°. This mixture F was filled in a cell of 2 µm thick subjected to parallel aligning treatment and the response time of the resulting liquid crystal cell at 25 °C was sought to give 150 µsec.

<u>Example 2</u>

The following base Sm mixture G was prepared from two compounds of the formula (I) having smectic C phase and three compounds of the formula (II) having smectic C phase:

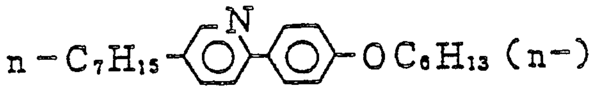 20 wt.%

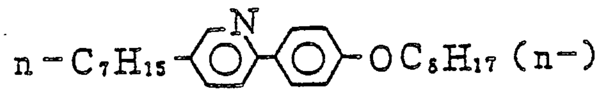 20 "

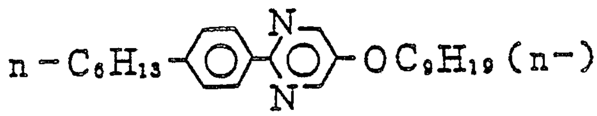 20 "

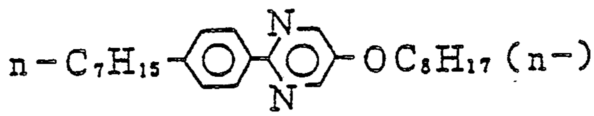 20 "

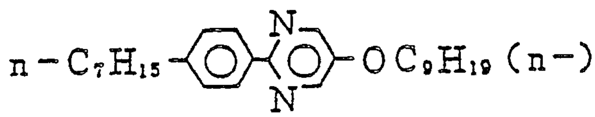 20 "

The phase transition points of this base Sm mixture G were as follows:

$$C \xrightarrow{-9^{\circ}C} SC \xleftrightarrow{60^{\circ}C} SA \xleftrightarrow{80^{\circ}C} I$$

Further, with 90 parts by weight of this mixture G was mixed the following optically active compound:

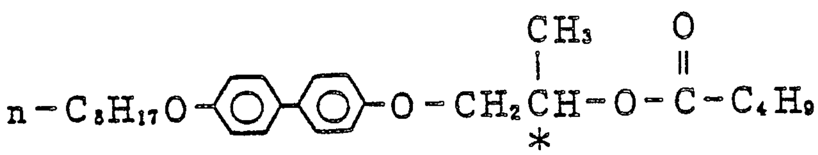

in 10 parts by weight to obtain a ferroelectric liquid crystal mixture H. Its phase transition points were as follows:

$$C \xrightarrow{-11^{\circ}C} SC^{*} \xleftrightarrow{50^{\circ}C} SA \xleftrightarrow{75^{\circ}C} I$$

Further, the specific features sought in the same manner as in Example 1 with the mixture H were as follows:
Ps, 9.6 nC/cm$^2$; tilt angle, 17.5$^{\circ}$; and response time, 70 µsec.

Example 3

A pyridine composition (50 parts by weight) consisting of the following five compounds of the formula (I) each in equal weight and a pyrimidine composition (50 parts by weight) consisting of the following five compounds of the formula (II) each in equal weight were mixed to prepare a smectic C mixture I:

Pyridine composition

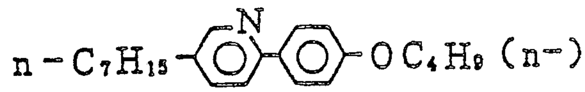

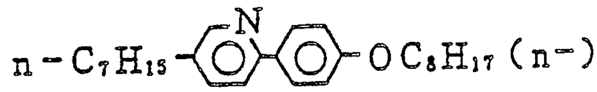

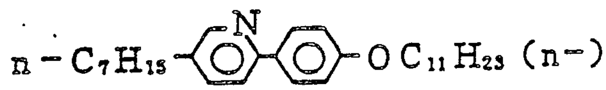

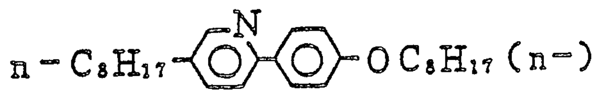

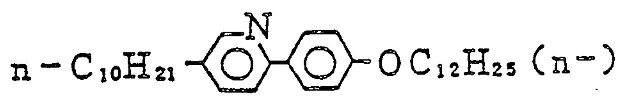

Pyrimidine composition

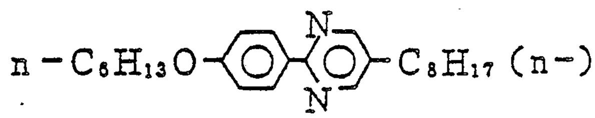

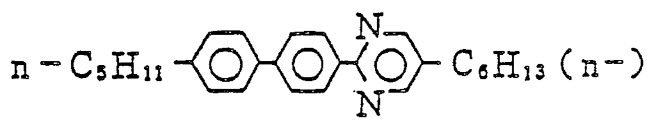

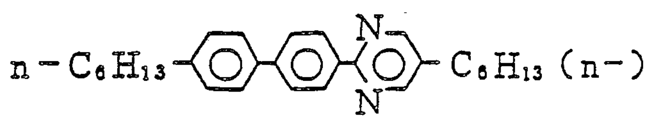

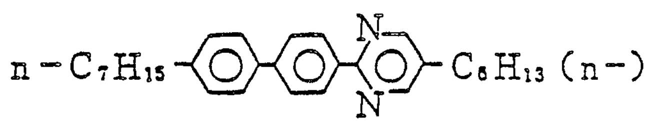

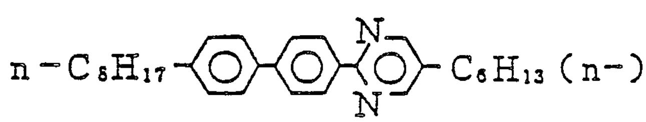

The phase transition points of this smectic C mixture I were as follows:

$$C \xrightarrow{-18^{\circ}C} SC \xleftrightarrow{81^{\circ}C} SA \xleftrightarrow{84^{\circ}C} N \xleftrightarrow{100^{\circ}C} I$$

Example 4

A smectic C mixture J was prepared from the pyridine composition used in Example 3 (60 parts by weight) and the pyrimidine composition used therein (40 parts by weight). The phase transition points of this smectic C mixture J were as follows:

$$C \xrightarrow{-12^{\circ}C} SC \xleftrightarrow{82^{\circ}C} SA \xleftrightarrow{83^{\circ}C} N \xleftrightarrow{106^{\circ}C} I$$

Example 5

The following three pyridine compounds and seven pyrimidine compounds each in equal weight were mixed to prepare a smectic C mixture K:

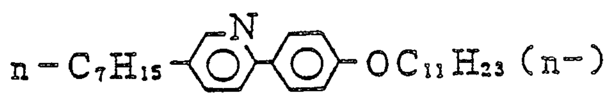

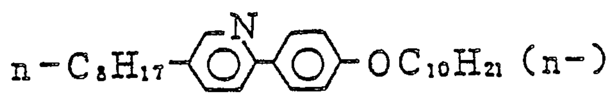

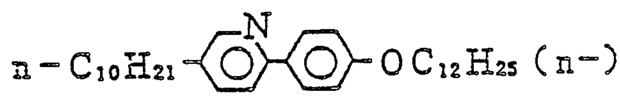

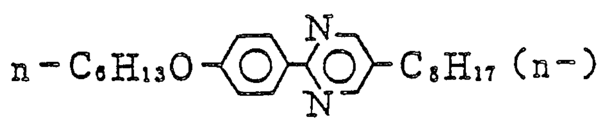

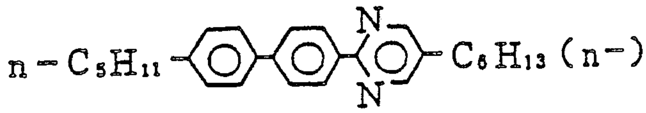

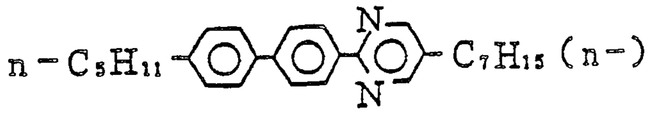

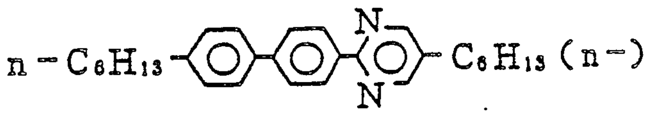

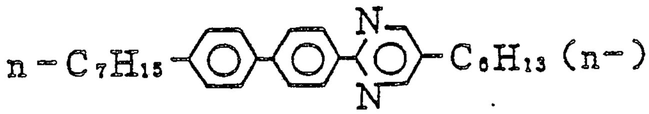

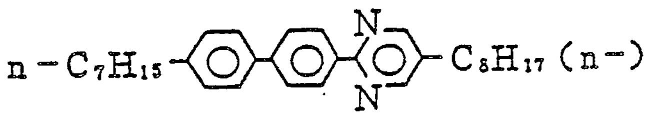

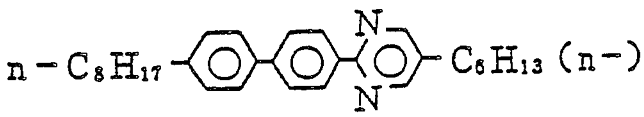

The phase transition points of this mixture K were as follows:

$$C \xrightarrow{-6^{\circ}C} SC \xleftrightarrow{93^{\circ}C} SA \xleftrightarrow{102^{\circ}C} N \xleftrightarrow{118^{\circ}C} I$$

<u>Example 6</u>

A smectic C mixture L was prepared from the following six pyridine compounds and five pyrimidine compounds:

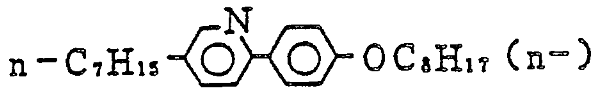 5 wt.%

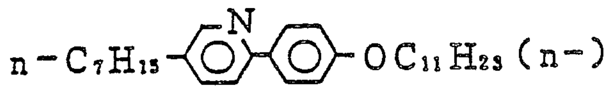 5 "

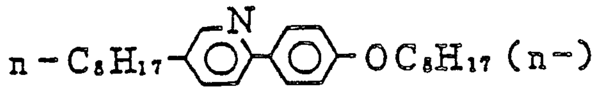 5 "

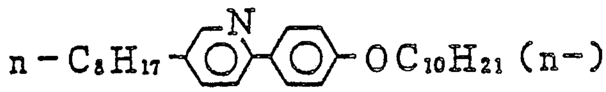 5 "

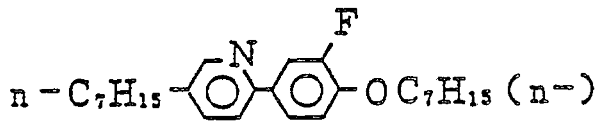 10 "

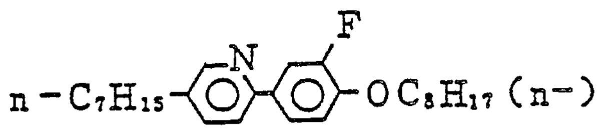 10 "

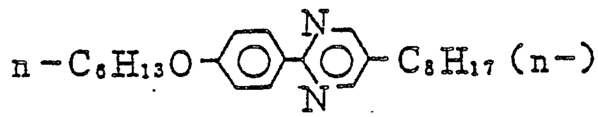 15 "

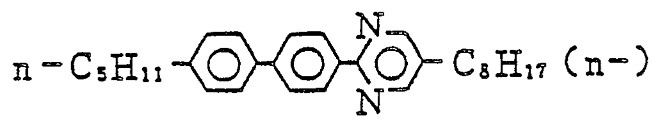 10 "

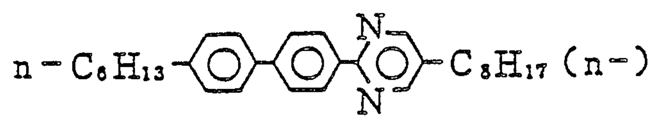 10 "

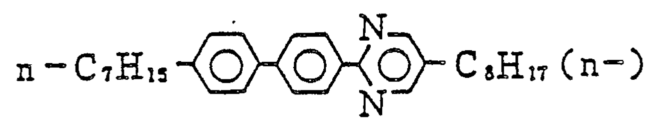 15 "

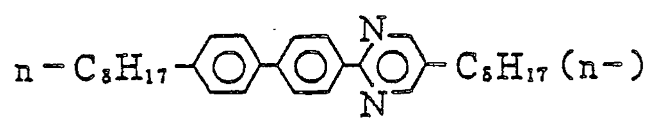 10 "

The phase transition points of this mixture L were as follows:

$$C \xrightarrow{-10^{\circ}C} SC \xleftrightarrow{78^{\circ}C} N \xleftrightarrow{100^{\circ}C} I$$

Example 7

A pyrimidine composition consisting of the following seven pyrimidine compounds was prepared:

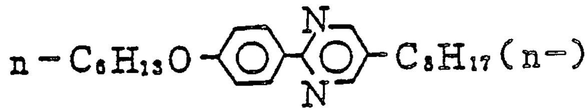 15.4 wt.%

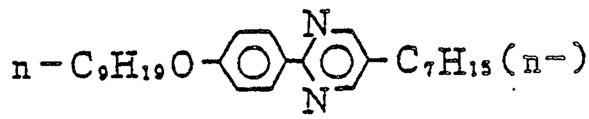 2.1 "

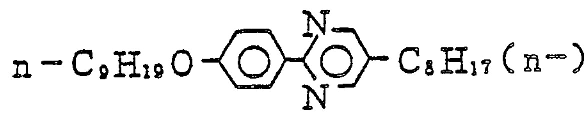 4.2 "

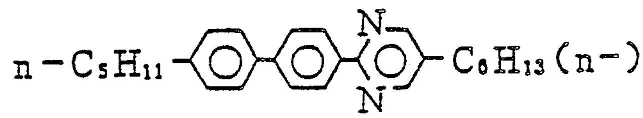 12.0 "

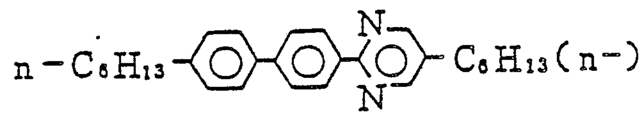 7.9 "

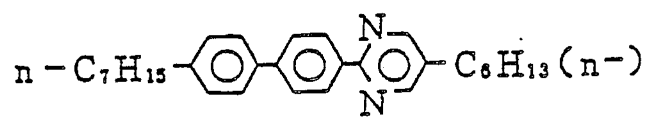 11.0 "

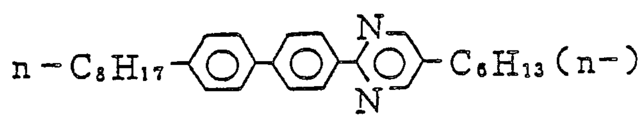 7.9 "

and a liquid crystal mixture M was prepared from the above pyrimidine composition (60.5% by weight) and the pyridine composition used in Example 3 (39.5% by weight). The phase transition points of this mixture M were as follows:

$$C \xrightarrow{-13^\circ C.} SC \xleftrightarrow{76^\circ C} SA \xleftrightarrow{81^\circ C} N \xleftrightarrow{98^\circ C} I$$

Example 8

A pyrimidine composition consisting of the following seven pyrimidine compounds of the formula (II) in the following proportions was prepared:

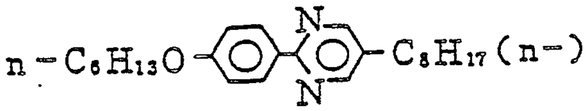

8.6 wt.%

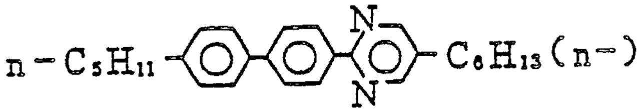

8.6 "

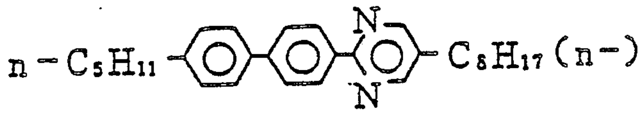

7.0 "

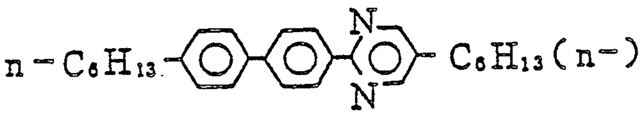

8.6 "

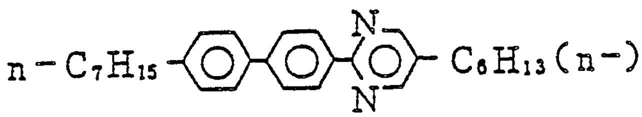

8.6 "

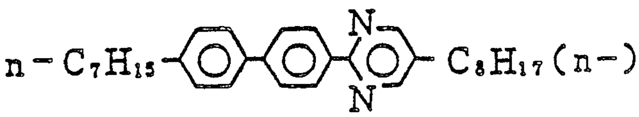

7.0 wt.%

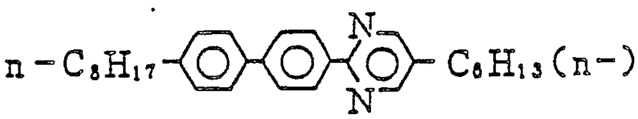

8.6 "

A smectic mixture N consisting of the above pyrimidine composition (57% by weight) and the pyridine composition used in Example 3 (43% by weight) was prepared. The phase transition points of this mixture N were as follows:

$$C \xrightarrow{-12^\circ C} SC \xleftrightarrow{85^\circ C} SA \xleftrightarrow{90^\circ C} N \xleftrightarrow{107^\circ C} I$$

Example 9

A pyrimidine composition consisting of the following nine pyrimidine compounds of the formula (II) in the following proportions was prepared:

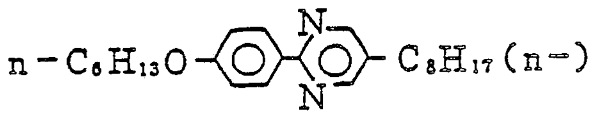

16.8 wt.%

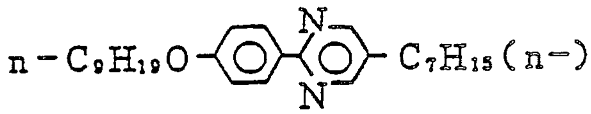

3.3 〃

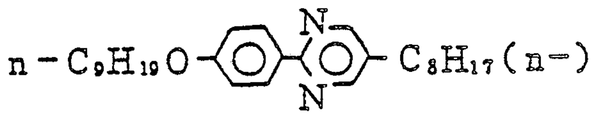

6.6 〃

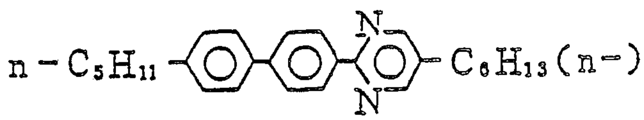

11.7 〃

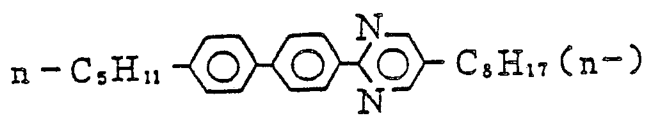

8.3 wt.%

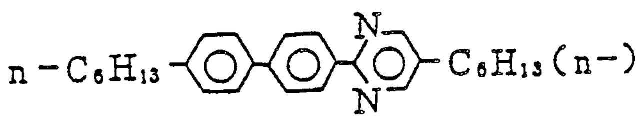

5.0 〃

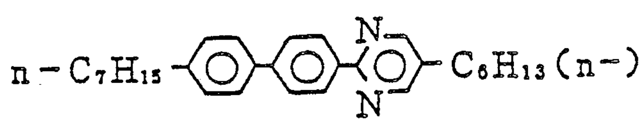

10.0 〃

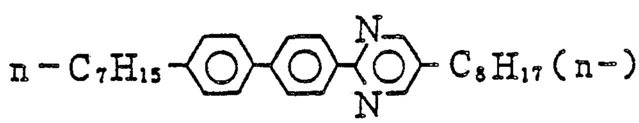

8.3 〃

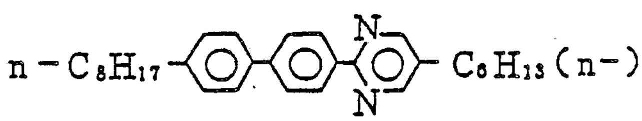

5.0 〃

A smectic liquid crystal mixture O consisting of the above pyrimidine composition (75% by weight) and the pyridine composition used in Example 3 (25% by weight) was prepared. The phase transition points of this mixture O were as follows:

$$C \xrightarrow{-5^{\circ}C} SC \xleftrightarrow{78^{\circ}C} SA \xleftrightarrow{86^{\circ}C} N \xleftrightarrow{106^{\circ}C} I$$

Example 10

The following two pyridine compounds and eight pyrimidine compounds were mixed each in an equal weight to prepare a liquid crystal mixture P:

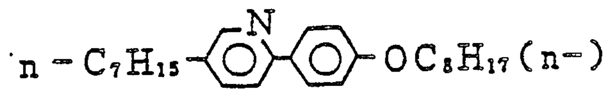

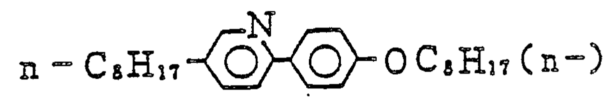

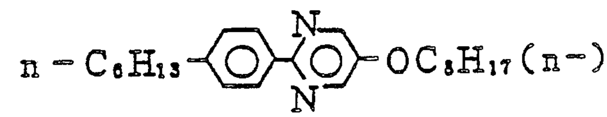

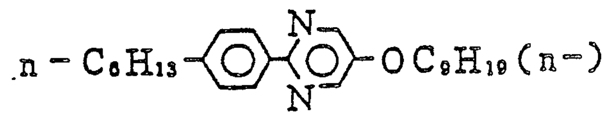

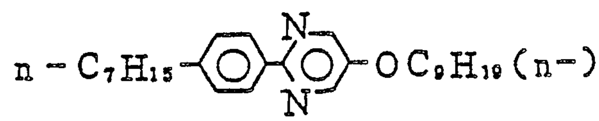

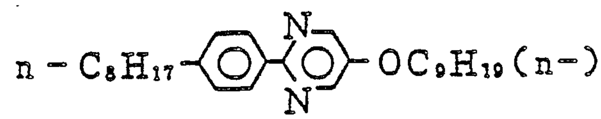

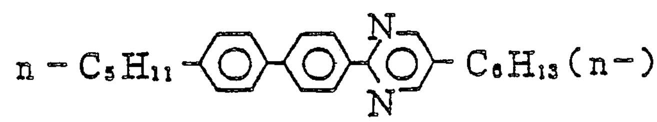

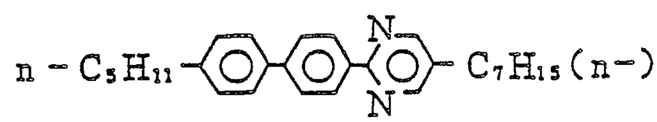

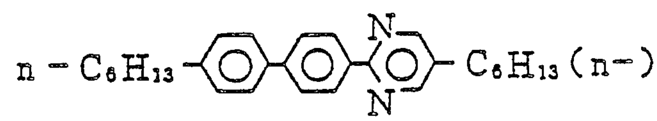

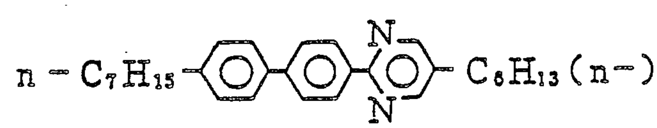

The phase transition points of this mixture P were as follows:

$$C \xrightarrow{-6^{\circ}C} SC \xleftrightarrow{76^{\circ}C} SA \xleftrightarrow{99^{\circ}C} N \xleftrightarrow{103^{\circ}C} I$$

Example 11

The following four pyridine compounds and six pyrimidine compounds were mixed each in an equal quantity to prepare a liquid mixture Q:

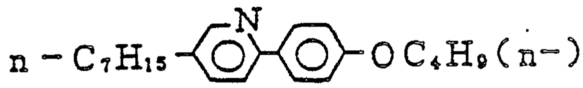

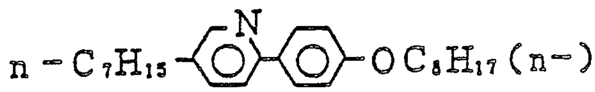

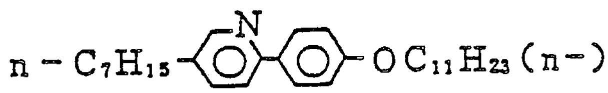

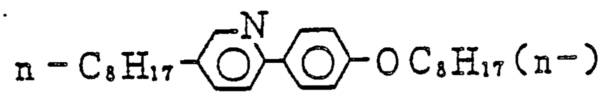

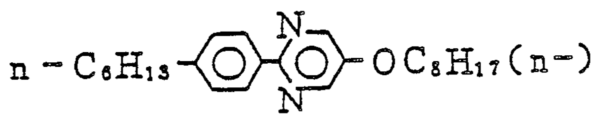

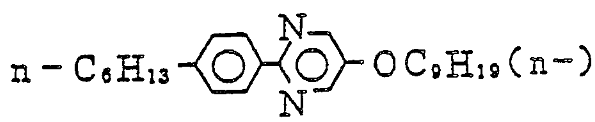

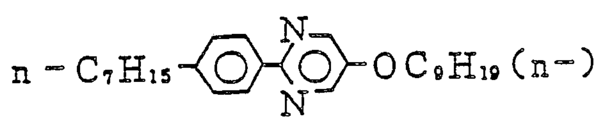

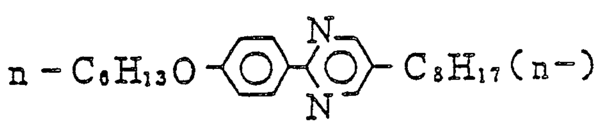

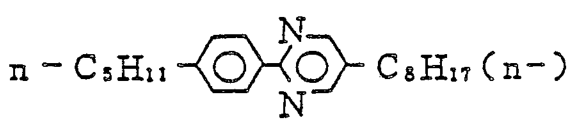

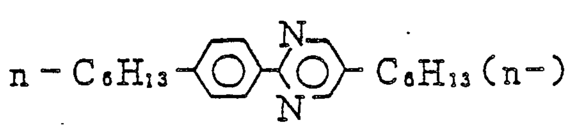

The phase transition points of this mixture Q were as follows:

$$C \xrightarrow{-21^\circ C} SC \xleftrightarrow{70^\circ C} SA \xleftrightarrow{93^\circ C} I$$

Example 12

The following six optically active compounds were mixed with the smectic C mixture I prepared in Example 3 (55 parts by weight) to prepare a liquid crystal mixture R:

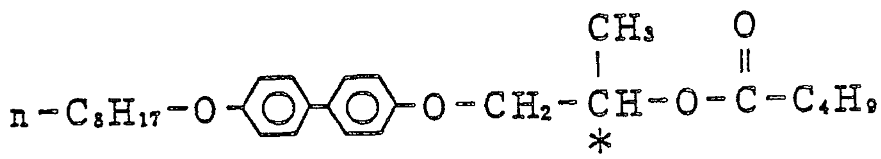

1 0 wt.parts

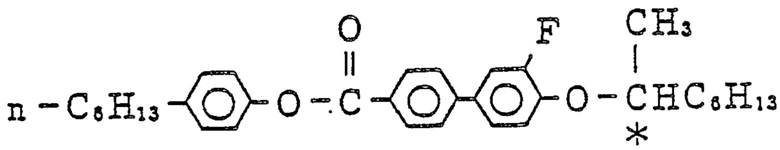

1 0 wt.parts

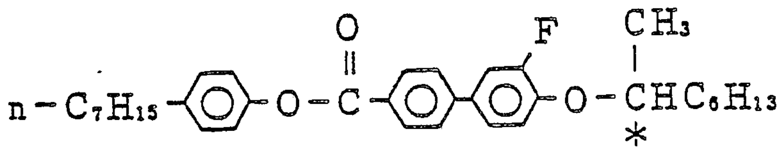

5 wt.parts

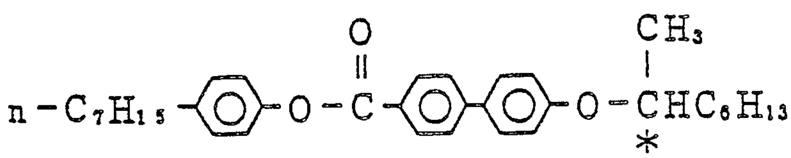

5 wt.parts

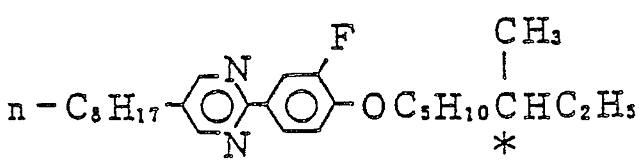

1 0 wt.parts

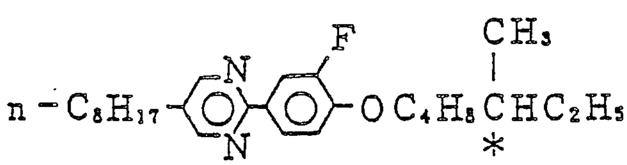

5 wt.parts

The phase transition points of this mixture R were as follows:

$$C \xrightarrow{-31^\circ C} SC^* \xleftrightarrow{59^\circ C} SA \xleftrightarrow{72^\circ C} N^* \xleftrightarrow{77^\circ C} I$$

Further, it exhibited as Ps of 21.2 nC/cm² and a tilt angle of 27° at 25° C, and the mixture R was filled in a cell same as in Example 1 and the response time was measured to give 80μsec at 25° C.

## Example 13

The following five optically active compounds were mixed with the smectic mixture K prepared in Example 5 (63 parts by weight) to prepare a liquid crystal mixture S:

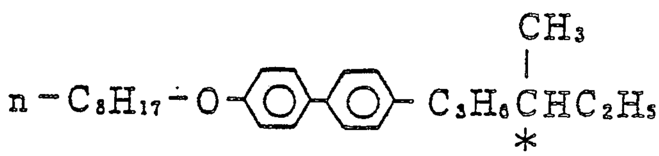

7 wt.parts

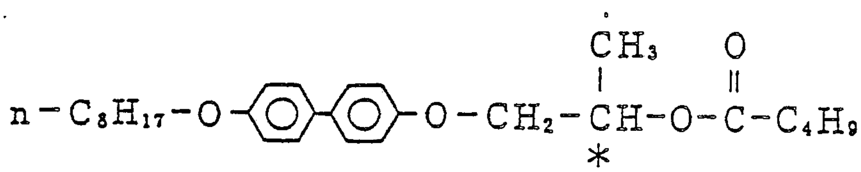

10 wt.parts

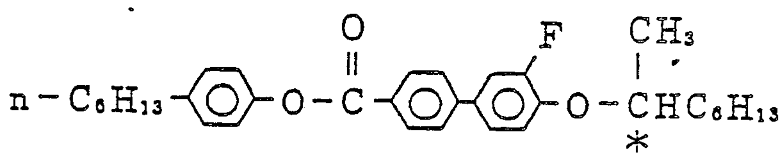

10 wt.parts

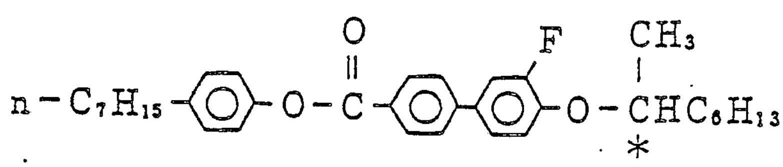

5 wt.parts

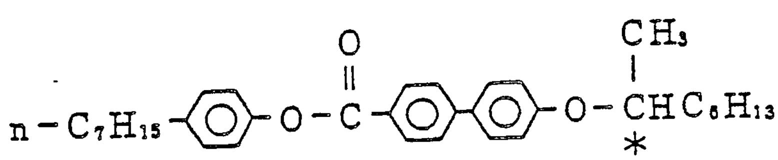

5 wt.parts

The phase transition points of this mixture S were as follows:

$$C \xrightarrow{-14^\circ C} SC^* \xleftrightarrow{73^\circ C} SA \xleftrightarrow{82^\circ C} N^* \xleftrightarrow{92^\circ C} I$$

and it exhibited a Ps of 18.9 nC/$cm^2$ and a tilt angle of 28.5° at 25°C.

Further, this ferroelectric liquid crystal mixture was filled in a cell same as in Example 1 and the response time was measured to give 80 µsec at 25°C.

## Claims

1. A smectic liquid crystal mixture comprising at least one member of pyridine compounds expressed by the formula

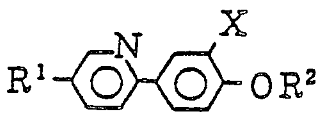

(I)

wherein $R^1$ and $R^2$ each represent an alkyl group of 1 to 18 carbon atoms and X represents hydrogen atom or a halogen atom, and at least one member of pyrimidine compounds expressed by the formula

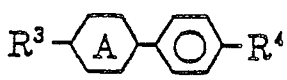

(II)

wherein $R^3$ and $R^4$ each represent an alkyl group or an alkoxy group each of 1 to 18 carbon atoms and

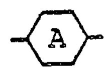

°

represents

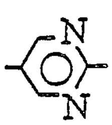 , 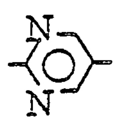 or 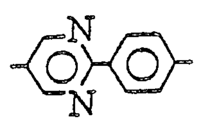 °

2. A smectic liquid crystal mixture according to claim 1 wherein the content of said at least one member of pyridine compounds is 5 to 80% by weight.

3. A smectic C liquid crystal mixture comprising

(a) at least one member of smectic C liquid crystalline pyridine compounds expressed by the formula

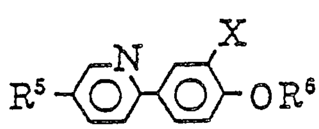

(III)

wherein $R^5$ represents a linear alkyl group of 6 to 12 carbon atoms, $R^6$ represents a linear alkyl group of 5 to 12 carbon atoms and X represents hydrogen atom or a fluorine atom; and

b) at least one member of smectic C liquid crystalline pyrimidine compounds selected from the group consisting of
smectic C liquid crystalline compounds expressed by the formula

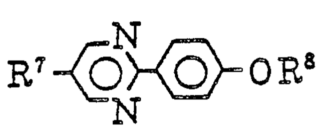

(IV)

wherein $R^7$ represents a linear alkyl group of 6 to 12 carbon atoms and $R^8$ represents a linear alkyl group of 6 to 12 carbon atoms,
smectic C liquid crystalline compounds expressed by the formula

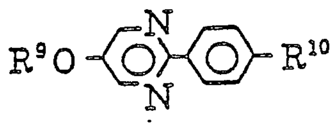 (V)

wherein $R^9$ represents a linear alkyl group of 7 to 18 carbon atoms and $R^{10}$ represents a linear alkyl group of 4 to 18 carbon atoms, and
smectic C liquid crystalline compounds expressed by the formula

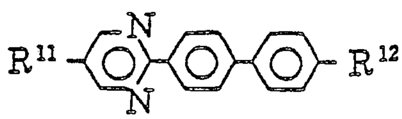 (VI)

wherein $R^{11}$ and $R^{12}$ each represent a linear alkyl group or alkoxy group each of 5 to 10 carbon atoms,
the content of said at least one member of smectic C liquid crystalline pyridine compounds being 5 to 80% by weight.

4. A ferroelectric smectic liquid crystal mixture comprising at least one member of pyridine compounds expressed by the formula

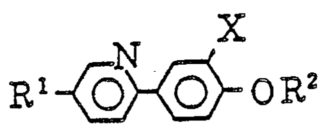 (I)

wherein $R^1$ and $R^2$ each represent an alkyl group of 1 to 18 carbon atoms and X represents hydrogen atom or a halogen atom;
at least one member of pyrimidine compounds expressed by the formula

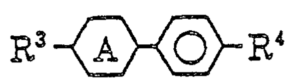 (II)

wherein $R^3$ and $R^4$ each represent an alkyl group or an alkoxy group each of 1 to 18 carbon atoms and

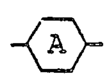

represents

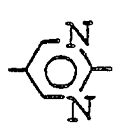 , 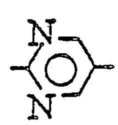 or 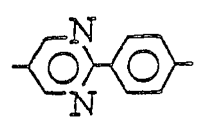 ;

and
at least one member of optically active compounds.

5. A liquid crystal display element using a ferroelectric liquid crystal composition as set forth in claim 4.

FIG. 1

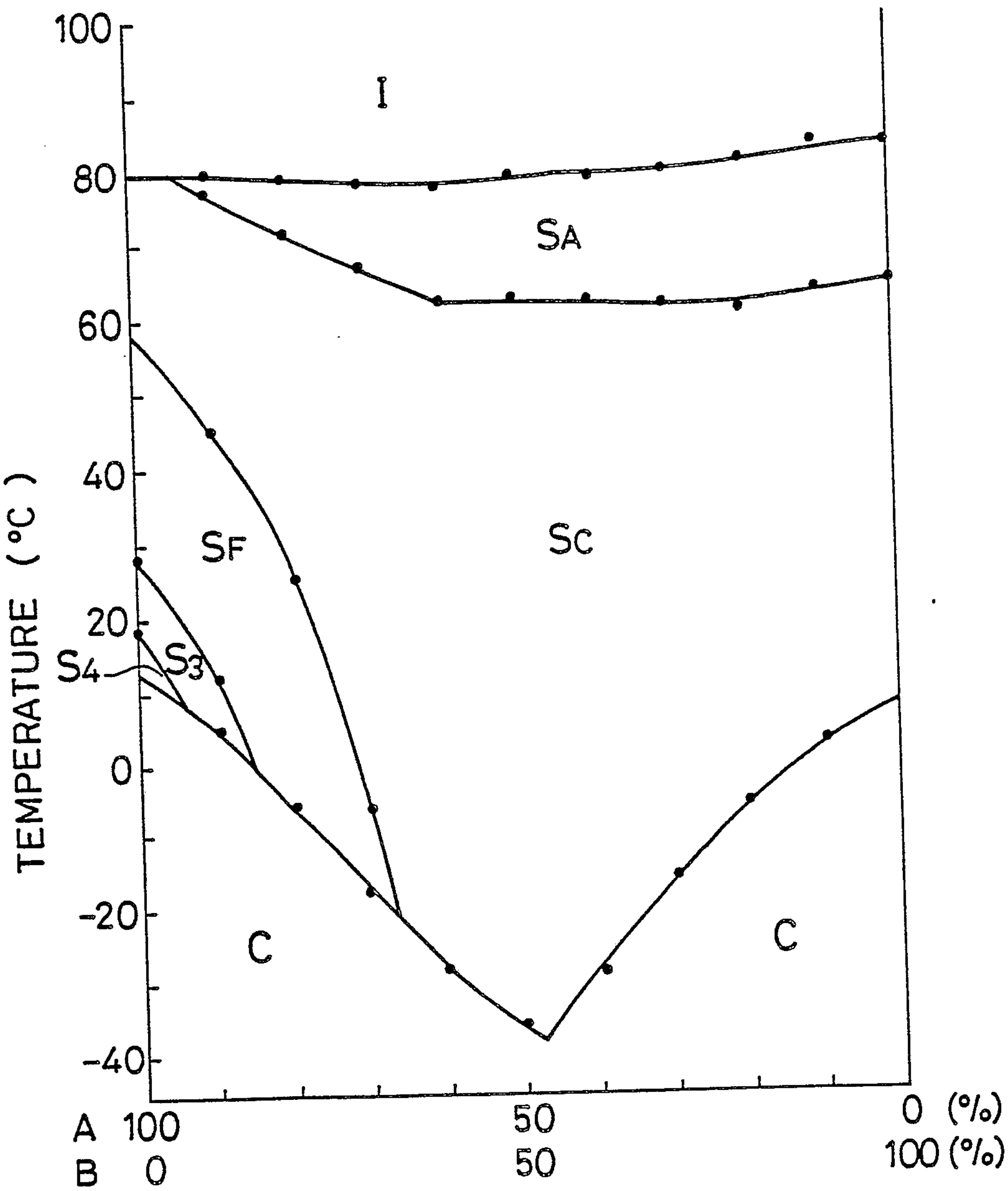
100
80
60
40
20
0
-20
-40
TEMPERATURE (°C)
I
SA
SC
SF
S4
S3
C
C
A 100
B 0
50
50
0 (%)
100 (%)

FIG.2

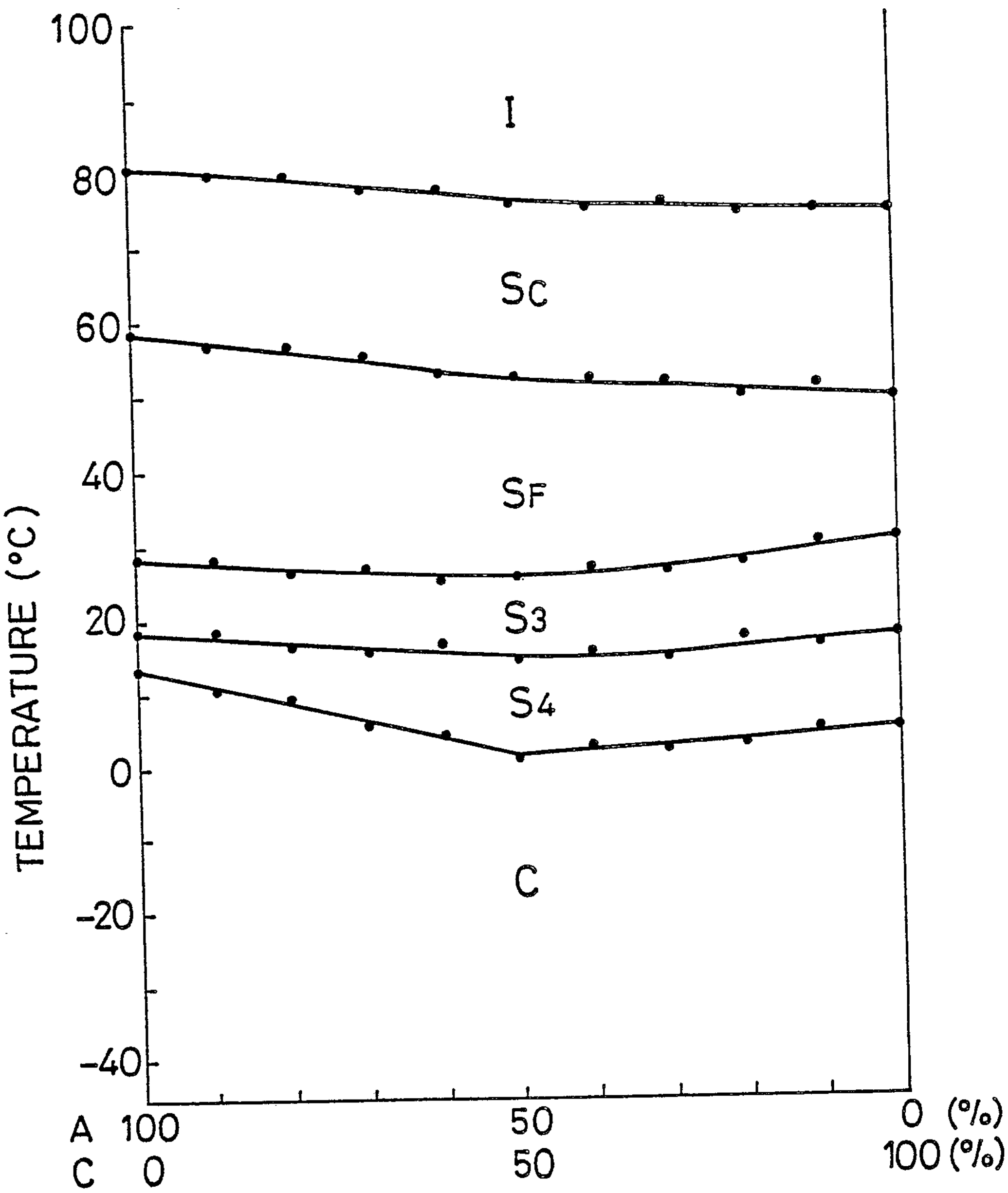
100
80
60
40
20
0
-20
-40
TEMPERATURE (°C)
I
Sc
SF
S3
S4
C
A 100
C 0
50
50
0 (%)
100 (%)

FIG.3